(19) Europäisches Patentamt / European Patent Office / Office européen des brevets

(11) **EP 4 037 028 A1**

(12) **EUROPEAN PATENT APPLICATION**
published in accordance with Art. 153(4) EPC

(43) Date of publication:
**03.08.2022 Bulletin 2022/31**

(21) Application number: **20867582.7**

(22) Date of filing: **16.09.2020**

(51) International Patent Classification (IPC):
*H01M 4/38* (2006.01)          *H01M 4/134* (2010.01)
*H01M 4/36* (2006.01)          *H01M 4/62* (2006.01)

(52) Cooperative Patent Classification (CPC):
**H01M 4/134; H01M 4/36; H01M 4/38; H01M 4/62;**
Y02E 60/10

(86) International application number:
**PCT/JP2020/035089**

(87) International publication number:
**WO 2021/060108 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.09.2019 JP 2019175724**

(71) Applicant: **SEKISUI CHEMICAL CO., LTD.**
**Osaka-shi**
**Osaka**
**530-8565 (JP)**

(72) Inventors:
• **SUN, Rende**
  **Mishima-gun, Osaka 618-0021 (JP)**
• **FUKUI, Hiroji**
  **Mishima-gun, Osaka 618-0021 (JP)**

(74) Representative: **Ter Meer Steinmeister & Partner**
**Patentanwälte mbB**
**Nymphenburger Straße 4**
**80335 München (DE)**

(54) **NEGATIVE ELECTRODE MATERIAL FOR SECONDARY BATTERIES, NEGATIVE ELECTRODE FOR SECONDARY BATTERIES, AND SECONDARY BATTERY**

(57)     Provided is a negative electrode material for a secondary battery capable of improving cycle characteristics due to charge and discharge of the secondary battery. A negative electrode material for a secondary battery includes a negative electrode active material containing a particle 1 and a first carbon material capable of occluding and releasing alkali metal ions or alkaline earth metal ions; and a conductive aid containing a second carbon material different from the first carbon material, in which the particle 1 has a mother particle 2 including a metal or a metal compound, a covering layer 3 covering at least a portion of a surface 2a of the mother particle 2 and including amorphous carbon, and a conductive material 4 attached directly or indirectly to the surface 2a of the mother particle 2 and having conductivity higher than that of the amorphous carbon.

[FIG. 1.]

EP 4 037 028 A1

**Description**

**TECHNICAL FIELD**

The present invention relates to a negative electrode material for a secondary battery containing a negative electrode active material and a conductive aid, and a negative electrode for a secondary battery and a secondary battery using the negative electrode material for a secondary battery.

**BACKGROUND ART**

In the prior art, research and development of secondary batteries have been actively conducted for mobile devices, hybrid vehicles, electric vehicles, household power storage applications, and the like. As a negative electrode active material used for a negative electrode of such a secondary battery, Si having a high theoretical capacity has attracted attention. However, when Si is used for the negative electrode active material, a volume change accompanying charging and discharging is extremely large, and the negative electrode active material may be cracked or peeled off from the electrode. Thus, initial coulombic efficiency and cycle characteristics due to charge and discharge may be deteriorated.

Patent Document 1 below discloses a negative electrode material for a lithium ion secondary battery using a fine particle-exfoliated graphite composite for a negative electrode active material. It is described that in the fine particle-exfoliated graphite composite, fine particles such as Si are trapped in partially exfoliated graphite having a structure in which graphene is partially exfoliated. It is described that the negative electrode material for a lithium ion secondary battery may contain acetylene black or Ketjen black as a conductive doping promoter. Patent Document 1 describes that deterioration of the cycle characteristics due to charge and discharge can be suppressed by using such a negative electrode material for a lithium ion secondary battery.

**Related Art Document**

**Patent Document**

Patent Document 1: JP 2014-197551 A

**SUMMARY OF THE INVENTION**

**PROBLEMS TO BE SOLVED BY THE INVENTION**

In recent years, secondary batteries having more excellent battery characteristics have been increasingly developed for applications such as hybrid vehicles and electric vehicles. Thus, a negative electrode material for a secondary battery capable of further improving the initial coulombic efficiency and further improving the cycle characteristics due to charge and discharge is required.

An object of the present invention is to provide a negative electrode material for a secondary battery capable of improving cycle characteristics due to charge and discharge of a secondary battery, and a negative electrode for a secondary battery and a secondary battery using the negative electrode material for a secondary battery.

**MEANS FOR SOLVING THE PROBLEMS**

A negative electrode material for a secondary battery according to the present invention including: a negative electrode active material containing a particle and a first carbon material capable of occluding and releasing alkali metal ions or alkaline earth metal ions; and a conductive aid containing a second carbon material different from the first carbon material, in which the particle has a mother particle including a metal or a metal compound, a covering layer covering at least a portion of a surface of the mother particle and including amorphous carbon, and a conductive material attached directly or indirectly to the surface of the mother particle and having conductivity higher than that of the amorphous carbon.

In a specific aspect of the negative electrode material for a secondary battery according to the present invention, the conductive material is attached to a surface of the covering layer.

In another specific aspect of the negative electrode material for a secondary battery according to the present invention, a volume resistivity of the conductive material under a load of 16 kN is $1.0 \times 10^{-1}$ $\Omega$·cm or less.

In still another specific aspect of the negative electrode material for a secondary battery according to the present invention, the conductive material is a conductive particle, and a ratio (conductive particles/mother particle) of an average particle diameter of the conductive particles to an average particle diameter of the mother particle is 1/50 or more and 1/2 or less.

In still another specific aspect of the negative electrode material for a secondary battery according to the present invention, the conductive material is a nanocarbon particle.

In still another specific aspect of the negative electrode material for a secondary battery according to the present invention, the conductive material is a conductive polymer.

In still another specific aspect of the negative electrode material for a secondary battery according to the present invention, the first carbon material is a carbon material having a graphene layered structure.

In still another specific aspect of the negative electrode material for a secondary battery according to the present invention, the second carbon material is partially exfoliated graphite which has a graphite structure and in which graphite is partially exfoliated.

In still another specific aspect of the negative electrode material for a secondary battery according to the present invention, the mother particle is at least one selected from the group consisting of Co, Mn, Ni, P, Sn, Ge, Si, Ti, Zr, V, Al, and compounds thereof.

In still another specific aspect of the negative electrode material for a secondary battery according to the present invention, the mother particle is Si or a compound of Si.

The negative electrode for a secondary battery according to the present invention includes the negative electrode material for a secondary battery configured according to the present invention.

The secondary battery according to the present invention includes the negative electrode for a secondary battery configured according to the present invention.

## EFFECT OF THE INVENTION

The present invention can provide a negative electrode material for a secondary battery capable of improving cycle characteristics due to charge and discharge of a secondary battery, and a negative electrode for a secondary battery and a secondary battery using the negative electrode material for a secondary battery.

## BRIEF DESCRIPTION OF DRAWINGS

[Fig. 1] Fig. 1 is a schematic cross-sectional view showing a particle constituting a negative electrode material for a secondary battery according to a first embodiment of the present invention.
[Fig. 2] Fig. 2 is a schematic cross-sectional view showing a particle constituting a negative electrode material for a secondary battery according to a second embodiment of the present invention.
[Fig. 3] Fig. 3 is an exploded perspective view showing a schematic configuration of a coin-type cell used for evaluation in Examples and Comparative Examples.

## MODE(S) FOR CARRYING OUT THE INVENTION

Hereinafter, the details of the present invention will be described.

[Negative electrode material for secondary battery]

The negative electrode material for a secondary battery according to the present invention is a negative electrode material for a secondary battery used for a negative electrode of the secondary battery. The negative electrode material for a secondary battery contains a negative electrode active material and a conductive aid. The negative electrode active material contains particles and a first carbon material capable of occluding and releasing alkali metal ions or alkaline earth metal ions. The conductive aid contains a second carbon material different from the first carbon material.

In the present invention, the particles contained in the negative electrode active material include a mother particle, a covering layer, and a conductive material. The mother particle includes a metal or a metal compound. The covering layer covers at least a portion of a surface of the mother particle. The covering layer includes amorphous carbon. The conductive material is attached directly or indirectly to the surface of the mother particle. The conductive material has higher conductivity than amorphous carbon.

Since the negative electrode material for a secondary battery of the present invention has the above configuration, cycle characteristics due to charge and discharge of the secondary battery can be improved.

In the prior art, when particles of Si or the like are used as a negative electrode active material of a secondary battery, a volume change accompanying charge and discharge is extremely large, and the negative electrode active material may be cracked or peeled off from the electrode. Thus, initial coulombic efficiency and cycle characteristics due to charge and discharge may be deteriorated.

The present inventors have paid attention to the particles contained in the negative electrode active material, and have found that the initial coulombic efficiency and the cycle characteristics due to charge and discharge can be greatly improved by covering the mother particle, including a metal or a metal compound, with amorphous carbon, and further attaching a conductive material.

More specifically, the mother particle contained in the negative electrode active material is covered with amorphous carbon, and since this amorphous carbon has more flexibility than normal crystalline carbon, the amorphous carbon has high followability to the volume change accompanying charge and discharge, and it is possible to suppress that the negative electrode active material is cracked or peeled off from the electrode. The amorphous carbon covering layer functions as an artificial SEI (solid electrolyte interphase) film, and can suppress decomposition of an electrolyte solution. In addition, since the conductive material having conductivity higher than that of amorphous carbon is attached to the mother particle contained in the negative electrode active material, the conductivity can be enhanced. Thus, the initial coulombic efficiency and the cycle characteristics due to charge and discharge in the secondary battery can be greatly improved.

In the present invention, a capacity of the negative electrode material for a secondary battery is preferably 400 mAh/g or more, more preferably 500 mAh/g or more, and preferably 3000 mAh/g or less, more preferably 2000 mAh/g or less, still more preferably 1500 mAh/g or less. When the capacity of the negative electrode material for a secondary battery is the above lower limit or more, the capacity of the secondary battery can be further increased. When the capacity of the negative electrode material for a secondary battery is the above upper limit or less, the initial coulombic efficiency in the secondary battery can be further enhanced, and the cycle characteristics due to charge and discharge can be further improved.

Hereinafter, the present invention will be described in more detail by describing specific embodiments of the present invention with reference to the drawings.

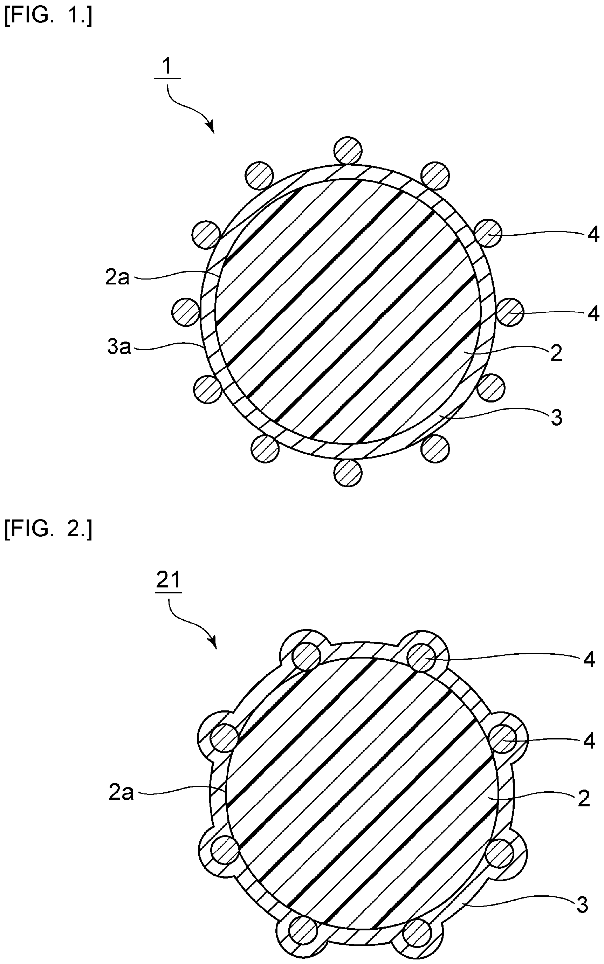

Fig. 1 is a schematic cross-sectional view showing a particle constituting a negative electrode material for a secondary battery according to a first embodiment of the present invention.

As shown in Fig. 1, a particle 1 includes a mother particle 2, a covering layer 3, and a conductive material 4. The mother particle 2 includes a metal or a metal compound. The covering layer 3 covers a surface 2a of the mother particle 2. The covering layer 3 includes amorphous carbon. The conductive material 4 is supported on a surface 3a of the covering layer 3. The conductive material 4 has higher conductivity than amorphous carbon. In the present embodiment, the conductive material 4 has a particulate shape.

Fig. 2 is a schematic cross-sectional view showing a particle constituting a negative electrode material for a secondary battery according to a second embodiment of the present invention. As shown in Fig. 2, in a particle 21, a conductive material 4 is supported on a surface 2a of a mother particle. A covering layer 3 is covered so as to cover the conductive material 4.

As shown in the first embodiment and the second embodiment, the conductive material 4 may be attached to the mother particle 2 via the covering layer 3, or may be directly attached to the surface 2a of the mother particle 2. The conductive material 4 desirably has a particulate shape as in the present embodiment, but may have a film shape.

In the present invention, the covering layer 3 covers preferably 30% or more, more preferably 50% or more, and still more preferably 70% or more of the surface 2a of the mother particle 2. In this case, the initial coulombic efficiency in the secondary battery can be further enhanced, and the cycle characteristics due to charge and discharge can be further improved. The covering layer 3 may cover the entire surface 2a of the mother particle 2.

The conductive material 4 covers preferably 20% or more, more preferably 40% or more of the surface 2a of the mother particle 2 or the surface 3a of the covering layer 3. In this case, the initial coulombic efficiency in the secondary battery can be further enhanced, and the cycle characteristics due to charge and discharge can be further improved. The conductive material 4 may cover the entire surface 2a of the mother particle 2 or the entire surface 3a of the covering layer 3, but desirably covers a portion thereof.

Details of each material constituting the negative electrode material for a second battery of the present invention are described below.

(Negative electrode active material)

Mother particle;

The mother particle includes a metal or a metal compound capable of occluding and releasing alkali metal ions or alkaline earth metal ions. Examples of the alkali metal ion include lithium ions, sodium ions, and potassium ions. Examples of the alkaline earth metal include calcium ions and magnesium ions. Among them, a metal or a metal compound capable of occluding and releasing lithium ions is desirable.

As the metal or the metal compound, Co, Mn, Ni, P, Sn, Ge, Si, Ti, Zr, V, Al, or a compound thereof can be used. Among them, Si, a compound of Si, Sn, or a compound of Sn is preferable. The compound of Si is preferably an alloy of Si and another metal, a Si oxide such as SiO or $SiO_2$, or the like. The compound of Sn is preferably an alloy of Sn and another metal, an oxide of Sn such as SnO or $SnO_2$, or the like. In this case, the capacity of the negative electrode material for a secondary battery can be further increased. These metals or metal compounds may be used singly or in combination of two or more kinds thereof.

The average particle diameter of the metal or the metal compound is not particularly limited. However, the average particle diameter of the metal or the metal compound is preferably 10 nm or more, more preferably 20 nm or more, and preferably 1000 nm or less, more preferably 500 nm or less. When the average particle diameter of the metal or the metal compound is within the above range, the initial coulombic efficiency in the secondary battery can be further enhanced, and the cycle characteristics due to charge and discharge can be further improved. The average particle diameter refers to a value calculated by a volume-based distribution using a particle size distribution measuring apparatus by a dynamic light scattering method or a particle size distribution measuring apparatus by a laser diffraction method.

Although the shape of the metal or the metal compound is not particularly limited, for example, a spherical shape, a substantially spherical shape, a flaky shape, a planar shape, an elliptical shape, a substantially elliptical shape, or the like may be adopted. In addition to the above shape, a structure having a hollow or porous inside can also be used. Among the shapes, a spherical shape or a substantially spherical shape is preferable.

Covering layer;

The covering layer covers at least a portion of the surface of the mother particle. The covering layer includes amorphous carbon. As described above, in the case of covering with amorphous carbon, the covering layer is relatively easily prepared, the conductivity and ion permeability of the covering layer have no anisotropy, flexibility is higher than that of crystalline carbon, and therefore it is preferable.

Since the covering layer covers at least a portion of the surface of the mother particle, the covering layer has high adhesiveness and high followability to the negative electrode active material against the volume expansion and contraction during charge and discharge, so that the covering layer exhibits a stabilizing effect against a change in the shape of the negative electrode active material, and it is possible to further enhance bondability and the adhesion to the conductive aid and the binder. As a result, cracking and peeling from a current collector are less likely to occur during charge and discharge, and further good charge and discharge cycle stability can be realized.

Furthermore, since the active site on the surface of the mother particle is inactivated by the covering to suppress the decomposition of the electrolyte solution, an amount of insoluble salt precipitated on the surface of the mother particle is significantly reduced, and it is possible to prevent deterioration of battery characteristic due to excessive formation of an SEI film. The covering layer does not require a high temperature firing process and can be prepared by a simple process.

The covering layer may be formed on at least a portion of the surface of the mother particle, or may be formed so as to cover the entire surface of the mother particle. In order to further exhibit the covering effect, the covering layer is preferably formed so as to cover the entire surface of the mother particle continuously and uniformly.

The amorphous carbon constituting the covering layer is preferably derived from carbon contained in an oxazine resin. Since the oxazine resin can be carbonized at a low temperature, the cost can be reduced. Examples of the oxazine resin include a benzoxazine resin and a naphthoxazine resin, and among them, the naphthoxazine resin is preferable because it is most easily carbonized at a low temperature. Examples of raw materials used for producing the naphthoxazine resin include dihydroxynaphthalene, formaldehyde, and amines. A derivative of triazine may be used instead of the formaldehyde and the amines. The derivative of triazine is preferably substituted triazine at the N position. The derivative of triazine is more preferably 1,3,5-trimethylhexahydro-1,3,5-triazine. The naphthoxazine resin can be formed by dissolving the raw material in a suitable solvent and reacting the raw material with the solvent.

More specifically, the amorphous carbon constituting the covering layer is preferably produced by heat-treating the oxazine resin at a temperature of 150 to 350°C. In addition, by using the naphthoxazine resin that can be carbonized at a low temperature, the amorphous carbon can be produced at a lower temperature. Since the amorphous carbon can be obtained at such a low temperature, the amorphous carbon has an advantage that it can be produced at a lower cost and by a simpler process than ever before. The temperature of the heat treatment is more preferably 170 to 300°C. However, the temperature of the heat treatment may be 350 to 800°C depending on the purpose. The obtained covering layer is a dense film having pores having a size of a molecular, allows an alkali metal ion or an alkaline earth metal ion to freely pass through the covering layer, and at the same time, can inactivate the active site on the surface of the active material that causes the decomposition of the electrolyte solution.

The covering layer may contain an element other than carbon. Examples of the element other than carbon include nitrogen, hydrogen, and oxygen. The content of such an element is preferably 10 atomic % or less based on the total of the carbon and the element other than carbon.

The covering layer preferably contains nitrogen at a content of 0 to 5% by weight. By setting the nitrogen content within the above range, it is possible to obtain a covering layer having a more excellent physical property than a pure carbon film.

The covering layer preferably has a film thickness of 0.5 nm to 1.0 μm. When the covering layer has a film thickness within the above range, the covering layer has further appropriate flexibility, and a charge and discharge characteristic can be further improved. The upper limit of the film thickness of the covering layer is more preferably 500 nm. The more preferable lower limit of the film thickness of the covering layer is not particularly limited, and is, for example, 1 nm.

In the present invention, it is preferable that no peak is detected at a position where 2θ is 26.4° when the covering layer is analyzed by an X-ray diffraction method. The peak at the position where 2θ is 26.4° is a crystal peak of graphite, and it can be said that when no peak is detected at such a position, the carbon constituting the covering layer has an amorphous structure. The above measurement can be performed with an X-ray diffractometer (SmartLab Multipurpose, manufactured by Rigaku Corporation), for example.

In the present invention, the covering layer may be composed of only amorphous carbon, or may contain amorphous carbon and other components.

Conductive material;

The conductive material has higher conductivity than amorphous carbon. The volume resistivity of the conductive material is preferably $1.0 \times 10^0$ Ω·cm or less, more preferably $5.0 \times 10^{-1}$ Ω·cm or less, and still more preferably $1.0 \times 10^{-1}$ Ω·cm or less. The lower limit value of the volume resistivity of the conductive material is not particularly limited, and may be, for example, $1.0 \times 10^{-5}$ Ω·cm. The volume resistivity of amorphous carbon is usually about $1.0 \times 10^0$ Ω·cm or more and $1.0 \times 10^8$ Ω·cm or less.

The volume resistivity can be obtained, for example, by measuring a resistance value at a load of 16 kN using a four point probe method. The volume resistivity can be measured using, for example, a powder resistance measurement device (product number "MCP-PD51" manufactured by Mitsubishi Chemical Analytech, Co., Ltd.).

The shape of the conductive material is not particularly limited, and may be particulate or film-like. However, the conductive material is preferably conductive particles.

As the shape of the conductive particle, a spherical shape, a substantially spherical shape, a flaky shape, a planar shape, an elliptical shape, a substantially elliptical shape, or the like may be adopted. Among the shapes, a spherical shape or a substantially spherical shape is preferable. In this case, the initial coulombic efficiency in the secondary battery can be further enhanced, and the cycle characteristics due to charge and discharge can be further improved.

The average particle diameter of the conductive particles is preferably 1.0 nm or more, and more preferably 5.0 nm or more and preferably 500 nm or less, and more preferably 300 nm or less. When the average particle diameter of the conductive particles is within the above range, the initial coulombic efficiency in the secondary battery can be further enhanced, and the cycle characteristics due to charge and discharge can be further improved.

The average particle diameter of the conductive particles can be measured by, for example, a dynamic light scattering method (DLS). As the apparatus, for example, measurement can be performed using a dynamic light scattering particle size distribution measuring apparatus (product number "Nanotrac Wave II" manufactured by MicrotracBEL Corp).

In the present invention, a ratio (conductive particle/mother particle) of the average particle diameter of the conductive particles to the average particle diameter of the mother particle is preferably 1/50 or more, more preferably 1/40 or more, and preferably 1/2 or less, more preferably 1/3 or less. When the ratio (conductive particle/mother particle) is within the above range, the initial coulombic efficiency in the secondary battery can be further enhanced, and the cycle characteristics due to charge and discharge can be further improved.

The conductive material is not particularly limited as long as it has higher conductivity than amorphous carbon, and for example, nanocarbon particles, resin particles, and the like can be used. These may be used alone, or a plurality of these may be used in combination.

The nanocarbon particles are not particularly limited, and for example, carbon black such as acetylene black or Ketjen black, graphene, graphene ribbon, graphene quantum dot, partially exfoliated graphite nanoparticles, and the like can be used.

The conductive polymer is not particularly limited, and for example, a polymer of a heterocyclic aromatic compound can be used. The heterocyclic aromatic compound is not particularly limited, and for example, three- or six-membered unsaturated compounds can be used. Among them, as the heterocyclic aromatic compound, it is desirable to use a five- or six-membered unsaturated compound containing a nitrogen atom or a sulfur atom. The heterocyclic aromatic compound is preferably a nitrogen-containing heterocyclic aromatic compound. The nitrogen-containing heterocyclic aromatic compound desirably has a carbon-carbon double bond in a nitrogen heterocyclic ring.

Examples of the five-membered nitrogen-containing heterocyclic aromatic compound include pyrrole (1H-azole), 2H-pyrrole (2H-azole), imidazole (1,3-diazole), pyrazole (1,2-diazole), thiazole, isothiazole (1,3-thiazole), oxazole, isoxazole (1,3-oxazole), furazan (1,2,5-oxadiazole), 1,2,5-thiadiazole, 1,2,3-thiadiazole, and 1,2,3-triazole. Among them, pyrrole and thiazole are preferable.

Examples of the six-membered nitrogen-containing heterocyclic aromatic compound include pyridine, pyrimidine, and pyridazine.

The heterocyclic aromatic compound may be a sulfur-containing heterocyclic aromatic compound such as thiophene or 3,4-ethylenedioxythiophene (EDOT).

Such heterocyclic aromatic compounds may be used singly or in combination of two or more kinds thereof.

A method for supporting such a conductive material is not particularly limited. When nanocarbon particles are used as the conductive material, for example, there is a method in which a dispersion liquid in which a mother particle covered with a covering layer in advance is dispersed and a dispersion liquid in which nanocarbon particles are dispersed are mixed in a state in which ultrasonic waves are applied to support the nanocarbon particles on the mother particle. At this time, it is preferable to use nanocarbon particles that have been previously subjected to dispersion treatment in a solution in which a raw material used for producing a naphthoxazine resin is dissolved in advance. In this case, the nanocarbon particles can be more reliably supported by the mother particle covered with the covering layer. Examples of raw materials used for producing the naphthoxazine resin include dihydroxynaphthalene as phenols, formaldehyde, and amines. Triazine or a derivative thereof may be used instead of the formaldehyde and the amines.

When the conductive polymer is used as the conductive material, for example, the conductive polymer can be supported by polymerizing a monomer constituting the conductive polymer in a dispersion liquid in which the mother particle covered with the covering layer in advance is dispersed. Alternatively, a nanoparticle dispersion liquid of the conductive polymer may be prepared in advance and then combined with Si particles.

First carbon material;

The negative electrode active material contains a first carbon material. It is desirable that the first carbon material can occlude and release the alkali metal ions or the alkaline earth metal ions. The first carbon material is preferably a carbon material having a graphene layered structure. In this case, the conductivity of the negative electrode material for a secondary battery can be further increased.

Whether or not the carbon material has the graphene layered structure can be confirmed by whether or not a peak near $2\theta = 26$ degrees (peak derived from the graphene layered structure) is observed when an X-ray diffraction spectrum of the carbon material is measured using a CuK$\alpha$ ray (wavelength: 1.541 Å). The X-ray diffraction spectrum can be measured by a wide-angle X-ray diffraction method. As the X-ray diffractometer, for example, SmartLab (manufactured by Rigaku Corporation) can be used.

Examples of the first carbon material include artificial graphite and natural graphite.

Although the shape of the first carbon material is not particularly limited, for example, a flaky shape, a planar shape, a spherical shape, a substantially spherical shape, an elliptical shape, a substantially elliptical shape, or the like may be adopted. Among the shapes, a substantially spherical shape or a substantially elliptical shape is preferable. When the particles of the first carbon material are not truly spherical, the cross section thereof is observed with an electron microscope and analyzed using image processing software (for example, product number "WinRoof" manufactured by MITANI CORPORATION), whereby a long to short ratio (minor axis/major axis) corresponding to an ellipse of the particles can be determined. An average value of the long to short ratio (minor axis/major axis) corresponding to an ellipse of the first carbon material is preferably 0.2 or more and preferably 1.0 or less.

By setting the ratio (minor axis/major axis) within the above range, a packing property and a contact property between the active materials at the time of forming an electrode film are improved, and characteristics as an electrode can be further enhanced. The shape of the first carbon material can be confirmed by, for example, a scanning electron microscope (SEM) or a transmission electron microscope (TEM). As described above, the long to short ratio corresponding to an ellipse can be determined from an electron micrograph of a particle using image processing software (for example, product number "WinRoof" manufactured by MITANI CORPORATION).

As a method for producing the first carbon material having a substantially spherical shape or a substantially elliptical shape, mechanical spheroidizing of natural graphite having a flaky shape or a planar shape can be employed. As artificial graphite, a mesocarbon microbead (MOMB) can be obtained by firing, at high temperature, a carbon precursor obtained from petroleum pitch or coal tar pitch. Among the carbon materials, the mesocarbon microbead is preferable because the carbon hexagonal mesh surface inside the mesocarbon microbead has a lamellar orientation and can smoothly occlude and release the alkali metal ion or the alkaline earth metal ion from all directions. Normal graphite can occlude and release a lithium ion only from the edge surface.

The first carbon material preferably has a specific gravity of 2.0 g/cm$^3$ or more and 2.5 g/cm$^3$ or less, and more preferably 2.3 g/cm$^3$ or less as measured by a helium gas displacement method. In this case, the crystallinity of the graphite is sufficiently developed, and the conductivity and the occluding or releasing property for the alkali metal ion or the alkaline earth metal ion can be further favorably kept.

A weight ratio of the particle to the first carbon material in the negative electrode active material (particle/first carbon material) is preferably 1/99 or more, more preferably 3/97 or more, and preferably 45/55 or less, more preferably 35/65 or less. When the weight ratio (particle/first carbon material) is the above lower limit or more, the capacity of the negative electrode material for a secondary battery can be further increased. When the weight ratio (particle/first carbon material) is the above upper limit or less, the initial coulombic efficiency in the secondary battery can be further enhanced, and the cycle characteristics due to charge and discharge can be further improved.

The content of the negative electrode active material is preferably 50% by weight or more and more preferably 60% by weight or more, and preferably 98% by weight or less and more preferably 95% by weight or less based on 100% by weight of the total negative electrode material for a secondary battery. When the content of the negative electrode active material is the above lower limit or more, the capacity of the secondary battery can be further increased. When the content of the negative electrode active material is the above upper limit or less, the content of the conductive aid can be further increased, and the conductivity can be further enhanced.

The surface of the first carbon material may be covered with another carbon material. In this case, the surface of the carbon material particle can be further stabilized, and the electrolyte solution decomposition reaction on the surface of the particle can be further reliably suppressed during charge and discharge. As another carbon material with which the surface of the first carbon material is covered, the same carbon material as the carbon material used for covering the surface of the metal or the metal compound can be used. The method for covering is not particularly limited, and examples of the method include known vapor phase methods (such as a CVD method) and liquid phase methods by a solution process.

(Conductive aid)

The conductive aid contains a second carbon material different from the first carbon material. The second carbon material is not particularly limited, and graphite or exfoliated graphite can be used. Particularly, partially exfoliated graphite which has a graphite structure and in which graphite is partially exfoliated is preferable. The initial coulombic efficiency in the secondary battery can be further enhanced, and the cycle characteristics due to charge and discharge can be further improved.

The description "graphite is partially exfoliated" refers to the fact that the graphene layers are separated in the range from the end edge to the inside to some extent in a graphene stack, that is, graphite is partially exfoliated at the end edge. Furthermore, the description refers to the fact that graphite layers are stacked in the portion on the center side similar to the original graphite or primary exfoliated graphite. A portion where graphite is partially exfoliated at the end edge is continuous with the portion on the center side. In addition, the partially exfoliated graphite in this case may include one in which graphite at the end edge is exfoliated.

As described above, in the partially exfoliated graphite, graphite layers are stacked in the portion on the center side similar to the original graphite or primary exfoliated graphite. Thus, the partially exfoliated graphite has a higher degree of graphitization than conventional graphene oxide and carbon black, and is more excellent in conductivity. Since the partially exfoliated graphite has a structure in which graphite is partially exfoliated, the specific surface area is large. In addition, since the partially exfoliated graphite has a flat plate shape and a two-dimensional spread, a better electron conduction path can be formed in the negative electrode, and the conductivity can be further enhanced.

The graphite is a laminate of a plurality of graphene. As the graphite, natural graphite, artificial graphite, expanded graphite, or the like can be used. A distance between the graphene layers is larger in expanded graphite than in common graphite. Therefore, the expanded graphite can be easily exfoliated.

In the graphite, usually, the number of stacked graphene sheets (graphene stacking number) is about 100,000 layers or more to 1,000,000 layers, and the graphene has a specific surface area by BET (BET specific surface area) of less than 25 $m^2/g$.

Exfoliated graphite is obtained by subjecting original graphite to exfoliation treatment, and refers to a graphene sheet stack thinner than the original graphite. The number of stacked layers of graphene sheets in the exfoliated graphite may be smaller than that in the original graphite

In the exfoliated graphite, the graphene stacking number is preferably 1,000 layers or less, more preferably 500 layers or less. When the graphene stacking number is the above-described upper limit or less, the specific surface area can be further increased.

In the present invention, the graphene stacking number in a portion where the graphite is partially exfoliated is preferably 5 layers or more and 3,000 layers or less. The number is more preferably 5 layers or more and 1,000 layers or less, and still more preferably 5 layers or more and 500 layers or less.

When the graphene stacking number is less than the above-described lower limit, the carbon materials in the negative electrode are sometimes difficult to connect because the graphene stacking number in the portion where the graphite is partially exfoliated is small. Thus, the conductivity of the negative electrode may not be sufficiently enhanced.

When the graphene stacking number is more than the above-described upper limit, the size of one partially exfoliated graphite is extremely large, and the distribution of the partially exfoliated graphite in the negative electrode is sometimes uneven. Thus, a good electron conduction path is sometimes not formed in the negative electrode.

A method of calculating the graphene stacking number is not particularly limited, and the number can be calculated by visual observation with a TEM or the like.

The partially exfoliated graphite can be produced, for example, by the production method described in WO 2014/034156. Specifically, the partially exfoliated graphite can be obtained by preparing a composition which contains graphite or primary exfoliated graphite and a resin and in which the resin is fixed to the graphite or the primary exfoliated graphite by grafting or adsorption, and pyrolizing the resin. The resin contained in the composition is preferably removed, but a part of the resin may remain. The primary exfoliated graphite is obtained by exfoliating graphite, and its specific surface area may be enough to be larger than that of graphite.

By the thermal decomposition, the distance between the graphene layers in the graphite or the primary exfoliated graphite is increased. More specifically, in a laminate of graphene such as the graphite or the primary exfoliated graphite, the graphene layers are separated in a range from the end edge to the inside to some extent. That is, it is possible to obtain a structure in which graphite is partially exfoliated and the graphite layers are stacked in the central portion similar to the original graphite or the primary exfoliated graphite.

When the resin remains in the partially exfoliated graphite, an amount of residual resin is preferably 1 part by weight or more and 350 parts by weight or less based on 100 parts by weight of the partially exfoliated graphite excluding a resin component. The amount is more preferably 5 parts by weight or more and 50 parts by weight or less, and still more preferably 5 parts by weight or more and 30 parts by weight or less.

When the amount of the residual resin is less than the above-described lower limit, the BET specific surface area is sometimes not secured. When the amount of the residual resin is more than the above-described upper limit, the manufacturing cost is sometimes increased. The amount of the residual resin can be calculated by, for example, a thermogravimetric analysis (hereinafter, referred to as TG) in which the weight change due to the heating temperature is measured.

The resin used for preparing the composition in which the resin is fixed to the graphite or the primary exfoliated graphite by grafting or adsorption is not particularly limited, and is preferably a polymer of a radically polymerizable monomer. The polymer of a radically polymerizable monomer may be a copolymer including a plurality of kinds of radically polymerizable monomers, or a homopolymer including one kind of radically polymerizable monomers.

Examples of such a resin include polypropylene glycol, polyglycidyl methacrylate, polyvinyl acetate, polyvinyl butyral, polyacrylic acid, and polyethylene glycol.

When the partially exfoliated graphite is used as the second carbon material, it is possible to more efficiently form a conduction path between the active materials including the above-described particles and the first carbon material, and, particularly, a conduction path between the particles having a small particle diameter to conduct because the second carbon material has more excellent flexibility and larger specific surface area than the first carbon material. In the partially exfoliated graphite, the specific surface area is large, and in addition, the graphene layers are separated in the range from the end edge to the inside to some extent. Thus, the particle having a small particle diameter are adsorbed or trapped on the surface or the inside of the separated layers, and the stress change due to a volume change of the metal or the metal compound during charge and discharge can be further relaxed. As a result, the cycle characteristics and the initial coulombic efficiency of the secondary battery can be further improved.

In the partially exfoliated graphite, when a peak intensity ratio of a D band and a G band is a D/G ratio in a Raman spectrum obtained by Raman spectroscopy, the D/G ratio is preferably 0.8 or less, and more preferably 0.7 or less. When the D/G ratio is in this range, the conductivity of the partially exfoliated graphite itself can be further enhanced, and at the same time, the decomposition of the electrolyte solution on the surface of the active material can be further suppressed. The D/G ratio is preferably 0.03 or more, and more preferably 0.05 or more. In this case, the high conductivity and the large specific surface area can be maintained in good balance, and the cycle characteristics can be further improved.

The BET specific surface area of the partially exfoliated graphite is preferably 30 m$^2$/g or more and more preferably 50 m$^2$/g or more, and preferably 2,500 m$^2$/g or less. When the BET specific surface area of the partially exfoliated graphite is the above-described lower limit or more, a better electron conduction path can be formed in the negative electrode. When the BET specific surface area of the partially exfoliated graphite is the above-described upper limit or less, handleability during the electrode preparation can be further enhanced.

When a methylene blue adsorption amount ($\mu$mol/g) per 1 g of the partially exfoliated graphite is defined as y and the BET specific surface area (m$^2$/g) of the partially exfoliated graphite is defined as x, a ratio y/x is preferably 0.15 or more, more preferably 0.15 or more and 1.0 or less, and still more preferably 0.2 or more and 0.9 or less.

A surface of the second carbon material including the partially exfoliated graphite may be covered with another carbon material, if necessary. In this case, the affinity for the active material (the first carbon material and the metal or the metal compound) and the affinity for a binder resin can be further improved, and the characteristic of the battery can be further improved. As another carbon material with which the surface of the second carbon material is covered, the same carbon material as the carbon material used for covering the surface of the metal or the metal compound can be used.

The shape of the second carbon material is not particularly limited, and examples thereof include a shape spreading two-dimensionally, a spherical shape, and an irregular shape. The shape of the second carbon material is preferably a shape spreading two-dimensionally. Examples of the shape spreading two-dimensionally include a flaky shape and a plate shape (flat plate shape). When the second carbon material has such a two-dimensionally spreading shape, a better conduction path can be formed in the negative electrode of the secondary battery.

The conductive aid may further contain a third carbon material different from the second carbon material. The third carbon material is not particularly limited, and examples thereof include graphene, granular graphite compounds, fibrous graphite compounds, and carbon blacks.

The graphene may be graphene oxide or reduced graphene oxide.

The granular graphite compounds are not particularly limited, and examples thereof include natural graphite, artificial graphite, and expanded graphite.

The fibrous graphite compounds are not particularly limited, and examples thereof include carbon nanotubes, carbon fibers, and carbon nanohorn.

The carbon blacks are not particularly limited, and examples thereof include furnace black, Ketjen black, and acetylene black.

On a surface of the third carbon material, a functional group may be present.

The third carbon material may be used singly or in combination of two or more kinds thereof.

The first to third carbon materials can be distinguished from each other by the shape and the size of the particles using, for example, an SEM or a TEM. The first to third carbon materials can also be distinguished from each other by measurement of the element composition using photoelectron spectroscopy (XPS) or by crystallinity evaluation of the particles using an X-ray diffraction method.

In the present invention, the weight ratio of the second carbon material to the third carbon material (second carbon material/third carbon material) is preferably 5/95 or more and more preferably 10/90 or more, and preferably 99/1 or less and more preferably 95/5 or less. When the weight ratio (second carbon material/third carbon material) is within the above range, the conductivity of the negative electrode material for a secondary battery can be further enhanced.

In the present invention, the content of the conductive aid is preferably 0.1% by weight or more, more preferably 0.5% by weight or more, and still more preferably 1.0% by weight or more, and preferably 20% by weight or less, more preferably 15% by weight or less, still more preferably 10% by weight or less, and particularly preferably 8.0% by weight or less based on 100% by weight of the total negative electrode material for a secondary battery. When the content of the conductive aid is the above-described lower limit or more, the conductivity of the negative electrode material for a secondary battery can be further sufficiently kept. When the content of the conductive aid is the above-described upper limit or less, the content of the negative electrode active material can be further increased, and the capacity of the secondary battery can be further increased.

The content of the second carbon material is preferably 0.1% by weight or more, more preferably 0.5% by weight or more, and still more preferably 1.0% by weight or more, and preferably 20% by weight or less, more preferably 15% by weight or less, still more preferably 10% by weight or less, and particularly preferably 8.0% by weight or less based on 100% by weight of the total negative electrode material for a secondary battery. When the content of the second carbon material is the above-described lower limit or more, the conductivity of the negative electrode material for a secondary battery can be further enhanced. When the content of the second carbon material is the above-described upper limit or less, the content of the negative electrode active material can be further increased, and the capacity of the secondary battery can be further increased.

In the present invention, the weight ratio of the second carbon material to the first carbon material (second carbon material/first carbon material) is preferably 0.005 or more and more preferably 0.007 or more, and preferably 0.5 or less, more preferably 0.4 or less, and still more preferably 0.35 or less. When the weight ratio (second carbon material/first carbon material) is the above-described lower limit or more, the conductivity of the negative electrode material for a secondary battery can be further reliably secured. When the weight ratio (second carbon material/first carbon material) is the above-described upper limit or less, the conductivity of the secondary battery is further sufficiently secured, and at the same time, the stress due to the expansion and contraction of the volume of the active material during charge and discharge can be further relaxed. As a result, the deterioration of the cycle characteristics during charge and discharge of the secondary battery can be further prevented, and the initial coulombic efficiency can be further enhanced.

(Binder resin)

The negative electrode material for a secondary battery of the present invention may further contain a binder resin. In this case, the negative electrode can be more easily prepared.

The binder resin is not particularly limited, and, for example, styrene-butadiene rubber, carboxymethyl cellulose, polyvinylidene fluoride (PVdF), a polyimide, an acrylic resin, a butyral resin, or a derivative thereof can be used. The binder resin may be used singly or in combination of two or more kinds thereof.

The binder resin is preferably dissolved or dispersed in a nonaqueous solvent or water from the viewpoint of more easily preparing the negative electrode.

The nonaqueous solvent is not particularly limited, and examples thereof include N-methyl-2-pyrrolidone (NMP), dimethylformamide, dimethylacetamide, methyl ethyl ketone, methyl acetate, ethyl acetate, and tetrahydrofuran. A dispersant and a thickener may be added to the nonaqueous solvent.

The content of the binder resin is preferably 0.5% by weight or more and more preferably 1.0% by weight or more, and preferably 30% by weight or less and more preferably 25% by weight or less based on 100% by weight of the total negative electrode material for a secondary battery. When the amount of the binder resin is within the above range, the bondability between the negative electrode active material and the conductive aid can be maintained, and the bondability to the current collector can be further enhanced.

[Secondary battery and negative electrode for secondary battery]

Examples of the secondary battery of the present invention include nonaqueous electrolyte secondary batteries, aqueous electrolyte secondary batteries, sulfur batteries, and lithium-sulfur batteries. Among the secondary batteries, the nonaqueous electrolyte secondary batteries are preferable, and among the nonaqueous electrolyte secondary batteries, those in which a lithium ion is used can be suitably used. Hereinafter, a nonaqueous electrolyte secondary battery in which a lithium ion is used (hereinafter, referred to as a lithium ion secondary battery) will be exemplified.

The positive electrode and the negative electrode of the nonaqueous electrolyte secondary battery may have a form in which the same electrodes are formed on one side or both sides of the current collector, or may have a form in which the positive electrode is formed on one side of the current collector and the negative electrode is formed on the other side, that is, the electrode may be a bipolar electrode.

The nonaqueous electrolyte secondary battery may be a wound laminate of the positive electrode and the negative electrode with a separator disposed between the positive electrode side and the negative electrode side or may be a laminate. The positive electrode, the negative electrode, and the separator contain a nonaqueous electrolyte that serves lithium ion conduction.

The nonaqueous electrolyte secondary battery may be packaged with a laminate film after winding the laminate or stacking a plurality of the laminates, or may be packaged with a metal can having a square shape, an elliptical shape, a cylindrical shape, a coin shape, a button shape, or a sheet shape. The exterior may have a mechanism for releasing the generated gas. The stacking number of the laminates is not particularly limited, and the laminates can be stacked until a desired voltage value and battery capacity are developed.

The nonaqueous electrolyte secondary battery can be an assembled battery in which batteries are appropriately connected in series or parallel depending on the desired size, capacity, and voltage. In the assembled battery, it is preferable that a control circuit is attached to the assembled battery in order to confirm the state of charge of each battery and improve the safety.

(Negative electrode)

The negative electrode includes the negative electrode material for a secondary battery of the present invention. Thus, in the secondary battery in which the negative electrode is used, the coulombic efficiency and the cycle characteristics due to charge and discharge can be improved.

Examples of a method for preparing the negative electrode include a method in which a mixture of the negative electrode active material, the carbon material, and the binder resin is formed on a current collector.

From the viewpoint of more easily preparing the negative electrode, the negative electrode is preferably prepared as described below. First, to the negative electrode active material including the particles and the first carbon material, and the second carbon material, a binder solution or a dispersion liquid is added and mixed to prepare a slurry. Next, the prepared slurry is applied to a current collector, and finally, the solvent is removed to prepare a negative electrode.

Examples of the method for preparing the slurry include a method in which a mixer or the like is used for mixing. The mixer used for the mixing is not particularly limited, and examples of the mixer include planetary mixers, dispersers, thin-film spin mixers, jet mixers, and rotation/revolution mixers.

From the viewpoint of more easily performing application, a solid content concentration of the slurry is preferably 30% by weight or more and 98% by weight or less. From the viewpoint of further enhancing storage stability, the solid content concentration of the slurry is more preferably 35% by weight or more and 95% by weight or less. From the viewpoint of further suppressing the manufacturing cost, the solid content concentration of the slurry is more preferably 40% by weight or more and 92% by weight or less.

The solid content concentration can be controlled with a diluting solvent. As the diluting solvent, it is preferable to use the same solvent as the binder solution or the dispersion liquid. Another solvent may be used as long as the solvent is compatible.

The current collector used in the negative electrode is preferably copper, SUS, nickel, titanium, aluminum, or an alloy containing such a metal. As the current collector, it is also possible to use a current collector obtained by covering a surface of a metal material (copper, SUS, nickel, titanium, or an alloy containing such a metal) with a metal that does not react at the potential of the negative electrode.

The thickness of the current collector is not particularly limited, and is preferably 5 $\mu$m or more and 100 $\mu$m or less. When the thickness of the current collector is less than 5 $\mu$m, handling may be difficult from the viewpoint of preparation. On the other hand, when the thickness of the current collector is more than 100 $\mu$m, it may be disadvantageous from an economic viewpoint.

The method of applying the slurry to the current collector is not particularly limited, and examples of the method include a method in which the slurry is applied with a doctor blade, a die coater, a comma coater, or the like and then the solvent is removed, a method in which the slurry is applied by spraying and then the solvent is removed, and a method in which the slurry is applied by screen printing and then the solvent is removed.

The method of removing the solvent is preferably a method of drying in which a blow oven or a vacuum oven is used from the viewpoint of further simplicity. Examples of the atmosphere in which the solvent is removed include an air atmosphere, an inert gas atmosphere, and a vacuum state. The temperature at which the solvent is removed is not particularly limited, and is preferably 60°C or more and 350°C or less, although the temperature depends on the kind of the used solvent. When the temperature at which the solvent is removed is less than 60°C, the removal of the solvent sometimes takes time. On the other hand, when the temperature at which the solvent is removed is more than 350°C, the binder resin sometimes deteriorates.

The negative electrode may be compressed to a desired thickness and a desired density. The compression is not particularly limited, and can be performed using, for example, a roll press, a hydraulic press, a cold isostatic press (CIP), a hot isostatic press (HIP), or the like.

The thickness of the negative electrode after compression is not particularly limited, and is preferably 1 $\mu$m or more and 1000 $\mu$m or less. When the thickness is less than 1 $\mu$m, it may be difficult to obtain a desired capacity. On the other hand, when the thickness is more than 1000 $\mu$m, it may be difficult to obtain a desired output density.

(Positive electrode)

The positive electrode is not particularly limited, and is required to contain, for example, a compound having a higher average potential of desorption and insertion of a lithium ion than the negative electrode active material, that is, a positive electrode active material. Examples of the compound include compounds having a layered rock salt structure represented by lithium cobalt oxide and lithium nickel oxide, compounds having a spinel structure represented by lithium manganate, compounds having an olivine structure represented by lithium iron olivine, and mixtures thereof.

(Separator)

The separator is required to be placed between the positive electrode and the negative electrode described above, and have an insulating property and a structure in which the nonaqueous electrolyte described below can be included. Examples of the material for the separator include nylon, cellulose, polysulfone, polyethylene, polypropylene, polybutene, polyacrylonitrile, polyimides, polyamides, polyethylene terephthalate, and woven fabrics, nonwoven fabrics, and microporous membranes, including a composite of the two or more above-described polymers.

The separator may contain various plasticizers, antioxidants, or flame retardants, or may be covered with a metal oxide or the like.

The thickness of the separator is not particularly limited, and is preferably 5 $\mu$m or more and 100 $\mu$m or less. When the thickness of the separator is less than 5 $\mu$m, the positive electrode and the negative electrode may come into contact with each other. When the thickness of the separator is more than 100 $\mu$m, resistance of the battery may increase. From the viewpoint of further improving economic efficiency and handleability, the thickness of the separator is more preferably 10 $\mu$m or more and 50 $\mu$m or less.

(Nonaqueous electrolyte)

The nonaqueous electrolyte used in the nonaqueous electrolyte secondary battery is not particularly limited, and a gel electrolyte in which a polymer is impregnated with an electrolyte solution in which a solute is dissolved in a nonaqueous solvent, a polymer solid electrolyte such as polyethylene oxide or polypropylene oxide, or an inorganic solid electrolyte such as sulfide glass or oxynitride can be used.

The nonaqueous solvent preferably contains a cyclic aprotic solvent and/or a chain aprotic solvent because the solute described below is more easily dissolved. Examples of the cyclic aprotic solvent include cyclic carbonates, cyclic esters, cyclic sulfones, and cyclic ethers. Examples of the chain aprotic solvent include chain carbonates, chain carboxylates, and chain ethers. In addition to the above-described solvents, a solvent, such as acetonitrile, generally used as a solvent for a nonaqueous electrolyte may be used. More specifically, dimethyl carbonate, methyl ethyl carbonate, dimethyl carbonate, dipropyl carbonate, methyl propyl carbonate, ethylene carbonate, propylene carbonate, butylene carbonate, γ-butyrolactone, 1,2-dimethoxyethane, sulfolane, dioxolane, methyl propionate, or the like can be used. These solvents may be used singly, or the two or more solvents may be mixed and used. It is preferable to use a solvent in which the two or more solvents are mixed from the viewpoints of more easily dissolving the solute described below and further enhancing the conductivity of a lithium ion.

The solute is not particularly limited, and, for example, $LiClO_4$, $LiBF_4$, $LiPF_6$, $LiAsF_6$, $LiCF_3SO_3$, LiBOB (Lithium Bis(Oxalato)Borate), and $LiN(SO_2CF_3)_2$ are preferable. In this case, the solute can be more easily dissolved by the solvent.

The concentration of the solute contained in the electrolyte solution is preferably 0.5 mol/L or more and 10 mol/L or less. When the concentration of the solute is less than 0.5 mol/L, desired lithium ion conductivity may not be exhibited. On the other hand, when the concentration of the solute is more than 10 mol/L, no more solute can be dissolved in some cases. The nonaqueous electrolyte may contain a trace amount of an additive such as a flame retardant or a stabilizer.

However, the secondary battery of the present invention may be an aqueous electrolyte secondary battery as described above. In this case, as the aqueous electrolyte solution, an aqueous solution in which a lithium salt, such as lithium nitrate, lithium sulfate, or lithium acetate, or the like is dissolved can be used.

Hereinafter, the present invention will be described more specifically with reference to Examples. However, the present invention is not limited to Examples, and can be appropriately modified as long as the gist of the present invention is not changed.

(Example 1)

Preparation of nanocarbon particles;

A commercially available carbon black (0.5 g) (trade name "BLACK PEARLS 2000" manufactured by Cabot Corporation) was added into ethanol (500 ml) in which 1,3,5-trimethylhexahydro-1,3,5-triazine (0.5 g) was dissolved, and were sonicated for 5 hours. Subsequently, the obtained solution was filtered, and the recovered solid was again dispersed in a suitable amount of ethanol. After dispersion, zirconia beads of 0.05 mm were further added, and dispersion treatment was performed at a rotation speed of 2000 rpm for 5 hours using a bead mill apparatus (product number "Nano Pulverizer NP-100" manufactured by THINKY Corporation). When the treated particles were measured with a particle size distribution analyzer (dynamic light scattering (DLS) particle size distribution measuring apparatus, product number "Nanotrac Wave II" manufactured by MicrotracBEL Corp), it was confirmed that particles having an average particle diameter of 20 nm were obtained.

The particles washed with ethanol were measured by X-ray photoelectron spectroscopy (XPS), and an N element was detected in an amount of 0.6%. It was also confirmed that a position of a 1s peak of the N element was shifted from an N1s peak of triazine. As a result, it could be confirmed that a surface of the nanocarbon particles was chemically modified with triazine.

Covering silicon raw material particles with amorphous carbon;

After 1,3,5-trimethylhexahydro-1,3,5-triazine (manufactured by Tokyo Chemical Industry Co., Ltd.) was dissolved in 400 ml of an ethanol solution (concentration: 0.03 mol/L), 3 g of silicon raw material particles (Si particles, manufactured by Sigma-Aldrich Co, LLC., average particle diameter < 100 nm) was then added, and application of ultrasonic waves and stirring were simultaneously performed at 60°C for 1 hour. Thereafter, while applying ultrasonic waves and stirring, 100 ml of an ethanol solution of 1,5-dihydroxynaphthalene (1,5-DHN, manufactured by Tokyo Chemical Industry Co., Ltd.) was added dropwise at a rate of 1.5 ml/min. After completion of the dropwise addition, the mixed solution was further reacted for 5 hours. After the reaction, the solution was filtered, and the particles were washed three times with ethanol. The washed particles were vacuum-dried at 110°C overnight and additionally heat-treated at 400°C for 2 hours in a nitrogen atmosphere to obtain Si particles covered with amorphous carbon. When particles obtained by the above treatment were observed with a transmission electron microscope, it was confirmed that a 6 nm covering layer was formed on the surface.

Supporting nanocarbon particles on Si particles covered with amorphous carbon;

The Si particles (0.5 g) covered with amorphous carbon was added to ethanol (400 ml) and dispersed by ultrasonic waves (liquid A). Next, the nanocarbon particles (0.05 g) modified with the triazine was added to ethanol (200 ml) and dispersed by ultrasonic waves (liquid B). Thereafter, while applying ultrasonic waves to the liquid A, the liquid B was gradually (5 ml/min) added to the liquid A, and ultrasonic treatment was further performed for 4 hours after completion of the addition. Thereafter, the dispersion liquid was filtered through a PTFE membrane-filter (pore diameter: 0.5 $\mu$m) to obtain Si particles on which nanocarbon particles were supported.

When the obtained particles were observed with a transmission electron microscope, it was confirmed that the periphery of the Si particles was covered with the nanocarbon particles. When resistance of the particles was measured with a powder resistance measurement device (product number "MCP-PD51 type" manufactured by Mitsubishi Chemical Analytech, Co., Ltd.), the resistivity at a load of 16 kN was $5.0 \times 10^{-1}$ $\Omega\cdot$cm, and it was confirmed that the resistivity was significantly improved as compared with that before support treatment (before the support treatment with the nanocarbon particles, the resistivity exceeded a measurement range (resistance to $10^7$ $\Omega$, resistivity > $10^6$ $\Omega$cm) of the apparatus, and the measurement was impossible).

Production example of second carbon material as partially exfoliated graphite;

First, a mixture of 16 g of expanded graphite (manufactured by TOYO TANSO CO., LTD., trade name "PF Powder 8F", BET specific surface area=22 m$^2$/g), 0.48 g of carboxymethyl cellulose (manufactured by Sigma-Aldrich Co. LLC., average molecular weight=250, 000), and 530 g of water was prepared. The prepared mixture was irradiated with ultrasonic waves for 5 hours using an ultrasonic treatment device (manufactured by SMT, CO., LTD., product number "UH-600SR"). Subsequently, polyethylene glycol (80 g) (manufactured by Sanyo Chemical Industries, Ltd., product number "PG600") was added, and the mixture was mixed for 30 minutes with a homomixer (manufactured by Tokushu Kika Kogyo Co., Ltd., T. K. HOMOMIXER MARK II) to prepare a raw material composition.

Next, the prepared raw material composition was heat-treated at 150°C to remove the water. Then, the composition from which the water had been removed was heat-treated at a temperature of 380°C for 1 hour to prepare a carbon material in which a part of the polyethylene glycol remained.

Finally, the obtained carbon material was heat-treated at 400°C for 30 minutes and at 350°C for 2 hours in this order to prepare a carbon material (second carbon material) having a graphite structure in which graphite was partially exfoliated. The obtained second carbon material contained 12% by weight of resin based on the total weight. As the amount of the resin, an amount of weight loss was calculated in a range of 200°C to 600°C using TG (manufactured by Hitachi High-Tech Science Corporation, product number "STA7300").

The D/G ratio as the peak intensity ratio of the D band and the G band in the Raman spectrum of the obtained second carbon material was measured, and the result was 0.234.

As a result of measuring the BET specific surface area of the obtained second carbon material using a specific surface area measuring apparatus (product number "ASAP-2000" manufactured by SHIMADZU CORPORATION, nitrogen gas), the BET specific surface area was 95 m$^2$/g.

The methylene blue adsorption amount of the obtained second carbon material was measured in the procedure described below, and the result was 69.7 $\mu$mol/g. When the BET specific surface area described above was defined as x and the methylene blue adsorption amount was defined as y, the ratio y/x was 0.733.

The methylene blue adsorption amount was measured as follows. Initially, methanol solutions of methylene blue (guaranteed reagent produced by KANTO CHEMICAL CO., INC.) at concentrations of 10.0 mg/L, 5.0 mg/L, 2.5 mg/L and 1.25 mg/L were prepared in volumetric flasks, the absorbance of each solution was measured by an ultraviolet-visible spectrophotometer (product number "UV-1600" manufactured by SHIMADZU CORPORATION), and a calibration curve was created. Next, methylene blue (10 mg/L) was prepared, and in a 100 mL eggplant flask, a carbon material to be measured (0.005 to 0.05 g, the amount was changed depending on the BET value of the sample), a methylene blue solution (10 mg/L, 50 mL), and a stirrer bar were added. The mixture was treated with an ultrasonic cleaner (manufactured by AS ONE CORPORATION) for 15 minutes, and then stirred for 60 minutes in a cooling bath (25°C). After reaching an adsorption equilibrium, the mixture was separated into the carbon material and the supernatant liquid by centrifugal separation. The absorbance of the 10 mg/L methylene blue solution as blank, and the absorbance of the above-mentioned supernatant liquid were measured by the ultraviolet-visible spectrophotometer. A difference between the absorbance of the blank and the absorbance of the supernatant liquid was calculated.=

$$\text{Methylene blue adsorption amount (mol/g)} = \{\text{decrease in concentration of methylene blue solution (g/L)} \times \text{volume of solvent for measurement (L)}\} / \{\text{molecular weight of methylene blue (g/mol)} \times \text{mass of carbon material used for measurement (g)}\} \quad \text{Formula}$$

Preparation of negative electrode film;

Si particles carrying the nanocarbon particles, graphite particles as the first carbon material, the second carbon material as the partially exfoliated graphite, and a polyamic acid as a precursor of a binder resin were mixed at a weight ratio (silicon particles: first carbon material: second carbon material: polyamic acid) = 12.5: 75.0: 2.5: 10.0 to prepare a mixture.

As the graphite particles as the first carbon material, trade name "OMAC-R" (average particle diameter: 18 $\mu$m) manufactured by Osaka Gas Chemicals Co., Ltd. was used. As the polyamic acid, trade name "U-Varnish-A" manufactured by Ube Industries, Ltd. was used.

Subsequently, an appropriate amount of N-methylpyrrolidone (NMP) as a solvent was added to the resulting mixture, and the mixture was kneaded using a rotating and revolving mixer ("Rentaro AR-100" manufactured by Thinky Corporation) to obtain a uniform paste.

Next, the prepared paste was applied to a surface of a copper foil having a thickness of 20 $\mu$m with an applicator (trade name "PI-1210" manufactured by Tester Sangyo Co., Ltd.) so that the film thickness was 30 $\mu$m. After the application, vacuum drying was performed at 100°C for 1 hour, and heat treatment was further performed at 250°C for 12 hours. Thereby, a negative electrode film was obtained.

(Example 2)

A negative electrode film was obtained in the same manner as in Example 1 except that particles in which polypyrrole as a conductive polymer was supported on the surface of Si particles covered with amorphous carbon as follows were used instead of the particles carrying the nanocarbon particles.

Supporting polypyrrole nanoparticles on Si particles covered with amorphous carbon;

Si particles (1 g) covered with amorphous carbon prepared in the same manner as in Example 1 was added to a mixed solvent (300 ml) of water and ethanol (water: ethanol = 4: 1 (volume %)), and dispersed by ultrasonic waves. Next, ammonium persulfate ($(NH_4)_2S_2O_8$) (0.02 g) was added to the above solution and dissolved by stirring. Thereafter, an aqueous solution (20 ml) in which pyrrole (0.1 g) was dissolved was slowly added to the above solution with a syringe, and then the solution was reacted for 15 hours while the temperature of the solution was maintained at 10°C. Finally, the blackened reaction solution was filtered, washed with pure water twice and ethanol twice in this order, and then vacuum-dried at 50°C.

When the obtained particles were observed with a transmission electron microscope, it was confirmed that the surface of the Si particles covered with amorphous carbon was covered with polypyrrole nanoparticles having an average particle diameter of 35 nm. The resistivity (load: 16 kN) of the particles measured with a powder resistance apparatus was $2.0 \times 10^2$ $\Omega$cm, which was significantly improved as compared with the particles before the support treatment.

(Example 3)

A negative electrode film was obtained in the same manner as in Example 1 except that $SnO_2$ particles prepared as follows were used as a metal or a metal compound.

Preparation of $SnO_2$ particles;

Tin chloride ($SnCl_2$) (4.0 g) and sodium dodecyl benzenesulfonate (SDBS) (5.0 g) were added to pure water (200 g), and the mixture was stirred at 50°C for 24 hours and reacted. Thereafter, a white precipitate generated was filtered, washed, and dried at 80°C for 12 hours. Next, the dried powder was fired at 750°C for 10 hours (air atmosphere) to obtain tin oxide ($SnO_2$) particles. It was confirmed from electron microscope observation that the obtained particles had a primary particle size of 80 nm.

(Example 4)

Supporting nanocarbon particles on silicon particles;

First, nanocarbon particles having an average particle diameter of 20 nm were prepared in the same manner as in Example 1. Next, the surface of the nanocarbon particles was positively charged by adjusting pH of a dispersion liquid of the nanocarbon particles to 4.5 with 0.01 mol/L acetic acid. Subsequently, silicon particles similar to the silicon particles used in Example 1 were added to the dispersion liquid (weight ratio of silicon particles to nanocarbon particles = 20: 1), and the dispersion liquid was subjected to ultrasonic treatment for 3 hours. By this treatment, the positively charged nanocarbon particles were adsorbed on the surface of the negatively charged silicon particles by electrostatic interaction. Thereafter, the mixed liquid was filtered, washed, and dried to obtain nanocarbon particle-supported silicon particles. When the recovered nanocarbon particle-supported silicon particles were observed with an electron microscope, it was confirmed that the nanocarbon particles were sparsely supported on the surface of the silicon particles.

Covering silicon particles supporting nanocarbon particles with amorphous carbon;

In 300 ml of ethanol, 0.5814 g of 1,3,5-trimethylhexahydro-1,3,5-triazine (manufactured by Tokyo Chemical Industry Co., Ltd.) and 0.7208 g of 1,5-DHN (manufactured by Tokyo Chemical Industry Co., Ltd.) were dissolved to prepare a covering liquid. Next, the silicon particles (5 g) sparsely supported by the nanocarbon particles was added to the covering liquid, and the mixture was reacted at 50°C for 5 hours. After the reaction, the solution was filtered, and the particles were washed three times with ethanol. The washed particles were vacuum-dried at 110°C overnight and additionally heat-treated at 600°C for 2 hours in a nitrogen atmosphere to obtain Si particles covered with amorphous carbon. When the particles obtained by the above treatment were observed with a transmission electron microscope, it was confirmed that a covering layer having a thickness of 10 nm was formed on the surface of the particles as shown in Fig. 2.

Preparation of negative electrode film;

A negative electrode film was prepared in the same manner as in Example 1 except that, instead of the Si particles supporting the nanocarbon particles in Example 1, silicon particles sparsely supported by the nanocarbon particles and covered with an amorphous carbon film continuous on the outermost surface were used.

(Comparative Example 1)

A negative electrode film was obtained in the same manner as in Example 1 except that the support treatment was not performed with the nanocarbon particles.

(Comparative Example 2)

A negative electrode film was obtained in the same manner as in Example 1 except that the Si particles were not covered with amorphous carbon.

(Comparative Example 3)

A negative electrode film was obtained in the same manner as in Example 3 except that the support treatment was not performed with the nanocarbon particles.

<Evaluation>

(Preparation of evaluation cell)

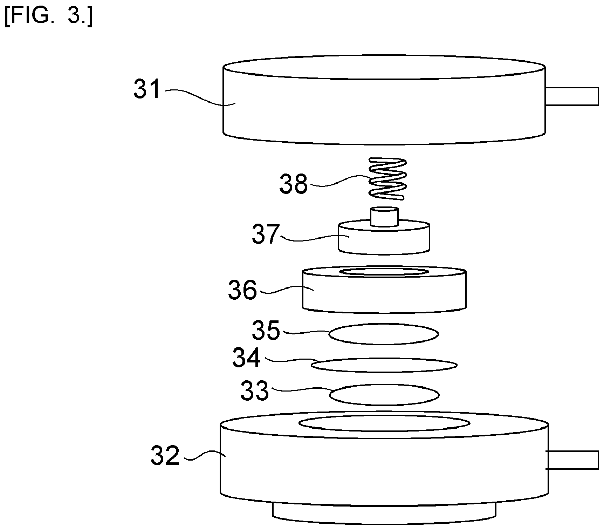

An evaluation cell was prepared using the negative electrode films obtained in Examples 1 to 4 and Comparative Examples 1 to 3. An assembly process of the evaluation cell was entirely performed in a vacuum glove box replaced with argon gas. As the evaluation cell, a coin-type cell (HS cell) having a structure as shown in Fig. 3 was used.

As shown in Fig. 3, a metal lithium piece 33 ($\Phi$ 10 mm, Li foil having a thickness of 0.2 mm), a separator 34 (trade name "ESFINO" (25 $\mu$m) manufactured by Sekisui Chemical Co., Ltd.), a negative electrode film 35 ($\Phi$ 10 mm, heat treated film at 250°C above), a fixing jig 36 made of resin, a collecting electrode 37, and a spring 38 were stacked in this order from the working electrode 32 side between a counter electrode 31 and a working electrode 32. The positive electrode is the metal lithium piece 33. As the electrolyte solution, a 1 mol/L LiPF$_6$/EC: DMC (1: 2 v/v%) solution (manufactured by Kishida Chemical Co., Ltd.) was used.

(Charge-discharge test)

In the coin-type cell assembled as described above, a charge and discharge test was performed under the conditions of a voltage of 1.5 to 0.02 V and a rate of 0.2 C (charge-discharge test apparatus: manufactured by Hokuto Denko Corporation, trade name "HJ1005SD8"). Specifically, first, charge was performed in a CCCV mode from 1.5 V to 0.02 V (process of inserting lithium into silicon). After charge, the battery was rested for 1 minute. Next, the battery was discharged from 0.02 V to 1.5 V in a CC mode. Next, the battery was rested for 1 minute.

The results of the initial coulombic efficiency and a capacity retention rate (cycle characteristics) after 30 cycles are shown in Table 1 below.

The battery characteristic was determined according to the following criteria.

Good... Initial coulombic efficiency is 70% or more and capacity retention rate is 90% or more
Poor... Initial coulombic efficiency is less than 70% and capacity retention rate is less than 90%

[Table 1]

| | | Composition | | Battery characteristics | | |
|---|---|---|---|---|---|---|
| | Type of metal or metal compound | Presence or absence of coverage with amorphous carbon | Presence or absence of support of conductive material | Initial coulombic efficiency (%) | Capacity retention rate (%) after 30 cycles | Determination |
| Example 1 | Si | Presence | Presence | 76.6 | 95.2 | Good |
| Example 2 | Si | Presence | Presence | 74.1 | 91.3 | Good |
| Example 3 | SnO$_2$ | Presence | Presence | 82.5 | 94.6 | Good |
| Example 4 | Si | Presence | Presence | 75.3 | 93.5 | Good |
| Comparative Example 1 | Si | Presence | Absence | 65.0 | 85.1 | Poor |
| Comparative Example 2 | Si | Absence | Presence | 55.4 | 68.3 | Poor |
| Comparative Example 3 | SnO$_2$ | Presence | Absence | 68.2 | 65.4 | Poor |

**EXPLANATION OF SYMBOLS**

1, 21:     Particle
2:          Mother particle
2a, 3a:   Surface
3:          Covering layer
4:          Conductive material
31:        Counter electrode
32:        Working electrode

| 33: | Metal lithium piece |
| 34: | Separator |
| 35: | Negative electrode film |
| 36: | Fixing jig |
| 37: | Counter electrode |
| 38: | Spring |

**Claims**

1. A negative electrode material for a secondary battery comprising:

   a negative electrode active material containing a particle and a first carbon material that occlude and release alkali metal ions or alkaline earth metal ions; and
   a conductive aid containing a second carbon material different from the first carbon material,
   the particle having a mother particle including a metal or a metal compound, a covering layer covering at least a portion of a surface of the mother particle and including amorphous carbon, and a conductive material attached directly or indirectly to the surface of the mother particle and having conductivity higher than that of the amorphous carbon.

2. The negative electrode material for a secondary battery according to claim 1, wherein the conductive material is attached to a surface of the covering layer.

3. The negative electrode material for a secondary battery according to claim 1 or 2, wherein a volume resistivity of the conductive material under a load of 16 kN is $1.0 \times 10^{-1}$ Ω-cm or less.

4. The negative electrode material for a secondary battery according to any one of claims 1 to 3, wherein the conductive material is a conductive particle, and a ratio (conductive particle/mother particle) of an average particle diameter of the conductive particles to an average particle diameter of the mother particle is 1/50 or more and 1/2 or less.

5. The negative electrode material for a secondary battery according to any one of claims 1 to 4, wherein the conductive material is a nanocarbon particle.

6. The negative electrode material for a secondary battery according to any one of claims 1 to 4, wherein the conductive material is a conductive polymer.

7. The negative electrode material for a secondary battery according to any one of claims 1 to 6, wherein the first carbon material is a carbon material having a graphene layered structure.

8. The negative electrode material for a secondary battery according to any one of claims 1 to 7, wherein the second carbon material is partially exfoliated graphite which has a graphite structure and in which graphite is partially exfoliated.

9. The negative electrode material for a secondary battery according to any one of claims 1 to 8, wherein the mother particle is at least one selected from the group consisting of Co, Mn, Ni, P, Sn, Ge, Si, Ti, Zr, V, Al, and compounds thereof.

10. The negative electrode material for a secondary battery according to any one of claims 1 to 9, wherein the mother particle is Si or a compound of Si.

11. A negative electrode for a secondary battery, comprising the negative electrode material for a secondary battery according to any one of claims 1 to 10.

12. A secondary battery comprising the negative electrode for a secondary battery according to claim 11.

[FIG. 1.]

[FIG. 2.]

[FIG. 3.]

## INTERNATIONAL SEARCH REPORT

| | International application No. |
|---|---|
| | PCT/JP2020/035089 |

**A. CLASSIFICATION OF SUBJECT MATTER**
H01M 4/38(2006.01)i; H01M 4/134(2010.01)i; H01M 4/36(2006.01)i; H01M
4/62(2006.01)i
FI: H01M4/38 Z; H01M4/36 C; H01M4/134; H01M4/62 Z
According to International Patent Classification (IPC) or to both national classification and IPC

**B. FIELDS SEARCHED**

Minimum documentation searched (classification system followed by classification symbols)
H01M4/38; H01M4/134; H01M4/36; H01M4/62

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2018-193479 A (TOYOTA INDUSTRIES CORPORATION)<br>06 December 2018 (2018-12-06) paragraphs [0051]-<br>[0056], [0064]-[0065], [0070] | 1-5, 9-12<br>6-8 |
| Y | CN 106229495 A (SHENZHEN UNIVERSITY) 14 December<br>2016 (2016-12-14) paragraphs [0003]-[0006] | 6-8 |
| Y | JP 2019-506708 A (NEC CORP.) 07 March 2019 (2019-<br>03-07) paragraphs [0012], [0021]-[0022] | 7-8 |
| A | JP 2015-230794 A (HITACHI CHEMICAL CO., LTD.) 21<br>December 2015 (2015-12-21) paragraphs [0087],<br>[0089] | 1-12 |
| A | JP 2015-179593 A (TOYOTA INDUSTRIES CORPORATION)<br>08 October 2015 (2015-10-08) | 1-12 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 November 2020 (06.11.2020) | 24 November 2020 (24.11.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT
Information on patent family members

International application No.

PCT/JP2020/035089

| Patent Documents referred in the Report | Publication Date | Patent Family | Publication Date |
|---|---|---|---|
| JP 2018-193479 A | 06 Dec. 2018 | (Family: none) | |
| CN 106229495 A | 14 Dec. 2016 | (Family: none) | |
| JP 2019-506708 A | 07 Mar. 2019 | US 2019/0006675 A1 paragraphs [0029], [0038]-[0039] WO 2017/122230 A1 | |
| JP 2015-230794 A | 21 Dec. 2015 | (Family: none) | |
| JP 2015-179593 A | 08 Oct. 2015 | (Family: none) | |

Form PCT/ISA/210 (patent family annex) (January 2015)

22

**EP 4 037 028 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014197551 A

- WO 2014034156 A